# EUROPEAN PATENT SPECIFICATION

(11) **EP 0 908 050 B1**
(45) Date of publication and mention of the grant of the patent: **14.04.2004**
(21) Application number: 97927275.4
(22) Date of filing: 19.06.1997
(51) Int. Cl.: H04N 7/025, H04N 7/64

(54) **DATA TRANSMISSION**
DATENÜBERTRAGUNG
TRANSMISSION DE DONNEES

(30) Priority: 25.06.1996 EP 96304675
(43) Date of publication of application: 14.04.1999
(73) Proprietor: BRITISH TELECOMMUNICATIONS public limited company, London EC1A 7AJ (GB)
(72) Inventor: HERON, Andrew Peter, Ipswich, Suffolk IP6 8XD (GB)
(74) Representative: Lloyd, Barry George William
(86) International application number: PCT/GB1997/001660
(87) International publication number: WO 1997/050247

(56) References cited:
- WO-A-93/10624
- FR-A- 2 505 114
- US-A- 4 847 840
- US-A- 5 287 540
- CHAMBERS ET AL.: "BBC Datacast - the transmission system" ELECTRONICS & WIRELESS WORLD, vol. 92, no. 1609, November 1986, LONDON, pages 95-98, XP002019797
- SCHRÖDER ET AL.: "HDTV-Empfänger-Architekturen, Algorithmen und Systemintegration" FKT FERNSEH-UND KINO-TECHNIK, vol. 47, no. 3, March 1993, HEIDELBERG, pages 166-175, XP000361926

## Description

This invention relates to data transmission and in particular to data transmission in which a multi-level representation of a digital signal is transmitted.

Digital data represents a signal that has been quantised in both time and amplitude. The digital data thus approximates the actual value of an analogue signal. If an analogue signal is digitised, the range of the analogue signal is divided into a number of levels e.g. 16, the analogue signal is sampled at set intervals and the appropriate level at that instant is determined. Since only 16 levels are used, the level which is closest to the actual level is chosen. A signal that is reconstructed from this digital data resembles but is not exactly the same as the original analogue signal. In binary digital data, a signal is represented by 0 or 1, a 0 being a 0 V pulse and a 1 being a 5 V pulse for example. If a sample of an input signal has an amplitude greater than half of the maximum range, the signal sample is represented by a 1. A 0 will result from samples having an amplitude less than half. Thus a series of ones and zeros is produced.

To reproduce the original signal, a receiver needs to know the threshold between the two levels. This is usually done by the transmitter signalling to the receiver the maximum range of the signal, the number of levels and the spacing of the levels e.g. if they are linearly spaced etc. The receiver then determines the threshold(s) and decodes an incoming signal. In practice, in a multi-level system there are distortions in the signal due to the response of the network, namely overshoot and ringing. The instantaneous level of any received sample is not only dependent on the transmitted sample, but on the recent previously transmitted samples and possibly the subsequently transmitted sample or samples.

U.S. patent 5,287,540 describes a digital detector with a comparator for comparing four-level input signals with decision levels to recover the transmitted symbols, and has updating logic for updating the decision levels, based on a "preamble" at the beginning of each received signal.

According to the present invention, there is provided a data transmission system comprising: a transmitter having means to encode an input signal to form coded data, each element of said coded data having one of at least two discrete signal magnitude levels, the encoding means including means to generate a predetermined training sequence of data having elements assuming said discrete levels; and a receiver having decoding means to receive said coded data and to compare it with a threshold or thresholds to allow the discrete levels to be distinguishable from each other, said receiver further having threshold adaptation means operable on the basis of the received training sequence to adapt said thresholds, wherein the threshold adaptation means includes means to monitor the effect of at least one of the elements of the training sequence on another of said elements of the training sequence and adapt the threshold(s) accordingly.

. Such a system allows the receiver continually to adapt the threshold(s) in dependence on the dynamic conditions of the transmission link between the transmitter and receiver, and the effects of the transmission link on groups of elements is accounted for.

The invention also relates to the transmitter and a receiver as defined in claims 7 and 11.

The invention will now be described by way of example only with reference to the accompanying drawings in which:
Figure 1 shows a data transmission system according to the invention;
Figure 2 shows an example of the line format of coded video data transmitted by the data transmission system of Figure 1;
Figure 3 shows a transmitter according to the invention;
Figure 4 shows a receiver according to the invention;
Figure 5 shows an example of the contents of a buffer after eleven lines of the training sequence have been received;
Figure 6 shows an example of a set of thresholds, generated from the contents of the buffer as shown in Figure 5; and
Figure 7 shows an example of a look-up-table generated from the thresholds of Figure 6.

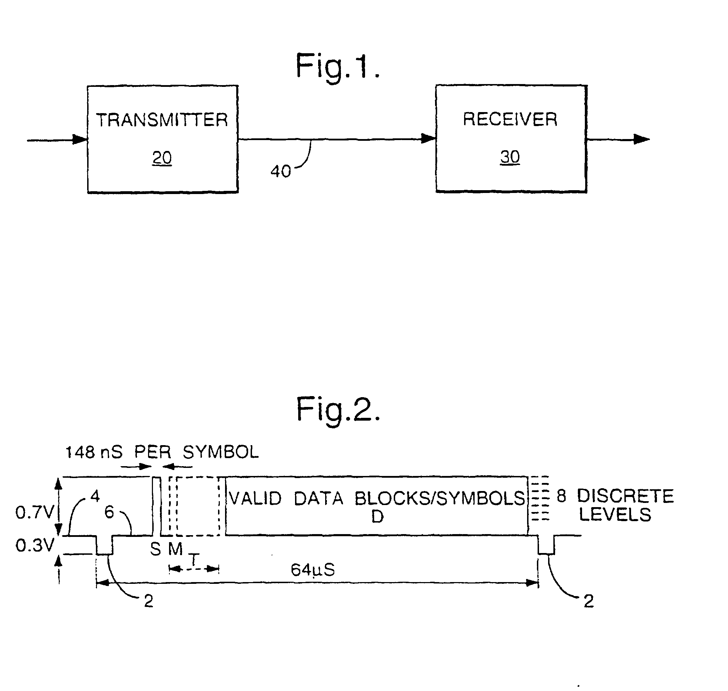

As shown in Figure 1 the digital data transmission system comprises a transmitter 20, a receiver 30 and a communications link 40. Data is transmitted from the transmitter 20 to the receiver 30 via the communications link 40 which may take any suitable form. For example the communications link 40 may be part of a Public Switched Telephone Network (PSTN), a dedicated line such as provided by an Integrated Services Digital Network (ISDN), a radio link, coaxial cable, optical fibre etc.

For illustrative purposes, the data transmission system to be described refers to the transmission of data representing a video image. However the invention is applicable to any system that transmits multi-level digital data, in particular for transmission over an analogue transmission link e.g. cable modems, higher bit rate teletext services.

The data transmission system to be described is suitable for distributing digital television signals to customers over an analogue hybrid fibre-coax network. In order to use existing analogue network infrastructure, the digital signals must be capable of being transmitted over the existing network in the same way as an ordinary TV channel.

The digital signal must therefore occupy a similar bandwidth to the ordinary TV channel (6-7 MHz). It must also 'look' like a TV signal in terms of amplitude and have regular 'line' sync pulses at 15.625 kHz, as some dc restoration in the network relies on this. Signal to noise ratio is around 50dB and there are non-linearities such as differential gain errors and sync pulse clipping to overcome.

In order to obtain reasonable capacity improvements over analogue, sufficient digital capacity to carry four multiplexed MPEG video streams of acceptable quality were desired.

The invention uses multi-level coding, whereby serial digital data is split into symbols of n bits. Each symbol is then coded as one of 2ⁿ discrete levels within the active video region.

By choosing the symbol rate to be 6.75 MHz the minimum pulse width encountered is 1/6.75x10⁶ i.e. 148 ns. This should pass through the bandwidth of the system without too much degradation. Given the system signal to noise ratio, it would be reasonable to expect to be able to recover eight distinct levels, giving three bits per symbol (i.e. n = 3).

Experiments have shown that it is not really necessary to maintain any frame timing as all clamps and dc restorers in the system use only the line syncs, and black levels. This means the frame timing can be omitted and a continuous stream of active 'lines' used. This increases the data throughput and simplifies the transmitter and receiver design.

By choosing a master clock rate of 27 MHz, readily available TV sampling clock recovery chips can be used to provide a reasonably low jitter line locked clock at the receiver. The signal can be oversampled at this rate to determine the best sampling position. Readily available video analogue-to-digital converters (ADCs) can be used as well as reasonable speed logic.

A diagram of the waveform to be transmitted is shown in Figure 2. It consists of a synchronisation (sync.) pulse 2 having a standard width and amplitude, repeating at 15.625 kHz. This is preceded and succeeded respectively by a front porch 4 and a back porch 6 to allow readily available TV sync pulse separators and analogue to digital converters to be used.

After the back porch 6 is a start pulse (S) which is used by the receiver to determine the best sampling position. There then follow eight symbols, five of which form a training sequence (T) which step through a set sequence over a number of lines. The first of these symbols (M) is a marker to allow the start of the training sequence to be determined. The exact nature and function of the training sequence will be described later.

There then follow a number of valid data symbols D. Each is nominally 148ns wide and is represented by one of eight distinct levels, nominally 0.1 V apart. The valid data can be split up into blocks to allow the addition of a block based forward error corrector (FEC). One overhead in systems which use block based FEC is the need to add framing bits to define the block boundaries, and the hardware at the receiver to search for and lock onto the framing. This is not necessary in this scheme as the data is already divided into 'lines' which can be further subdivided into blocks.

The choice of error corrector block size and total number of symbols per line depends on the required bit rate and the correcting power of the FEC.

The proposed system uses a BCH (Bose-Chaudhuri Hocquenghem) forward error corrector and divides the line into 17 blocks of 63 bits. Each 63 bit block contains 21 3-bit symbols, consisting of 19 symbols of data (57 bits) and 2 symbols of check bits (6 bits), giving a payload bitrate of 57x17x15625=15.140625 Mbit/sec.

For the sake of having a 'round' bitrate, the last block has three symbols which are not filled with data, giving ((57x17)-9)x15625 =15.00 MHz. It is felt that this is a reasonable rate into which four MPEG encoded TV channels can be multiplexed, giving the required quality per channel.

The FEC is capable of correcting one bit in error in each block. In order to reduce the likelihood of multiple-bit errors the symbols are Gray coded so that adjacent levels represent bit patterns with only one bit difference.

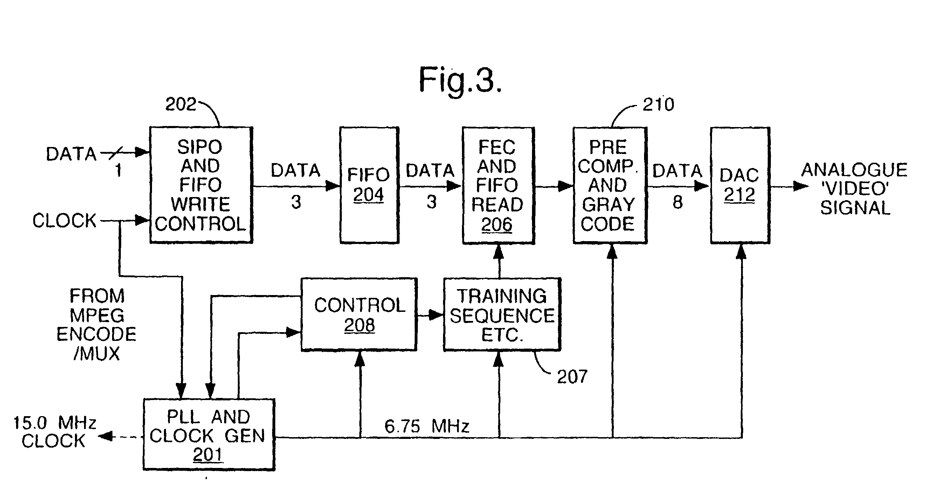

An example of the transmitter 20 is shown in Figure 3. The transmitter 20 can either be a slave to the MPEG multiplexer clock, or a master clock provider. The phase locked loop (PLL) and clock generator 201 generates the 6.75MHz symbol clock locked to the 15MHz data bit clock.

The incoming binary digital data is split into 3-bit symbols by a serial-in-parallel-out (SIPO) shift register 202 and stored in a first in, first out (FIFO) buffer 204. The FIFO 204 buffers the symbols between the continuous input data rate and the 'bursty' line and block structure. The symbols are read from the FIFO 204 and BCH FEC check bits are added by FEC encoder 206. At the start of each line, the sync pulse, black level (i.e. front porch and back porch), start pulse (S) and training sequence are added by a unit 207 under control of a control block 208. The data is then Gray coded and converted to an 8-bit representation 210 before being presented to the digital-to-analogue converter DAC 212. A certain amount of pre-compensation can be added at this stage to help reduce overshoot in the network. This effectively reduces the rise-time of the edges within the signal. The analogue output of the DAC 212 can then be transmitted across the network in the same way as a normal TV channel. An analogue post filter can be added if necessary to band limit the signal to suit the network.

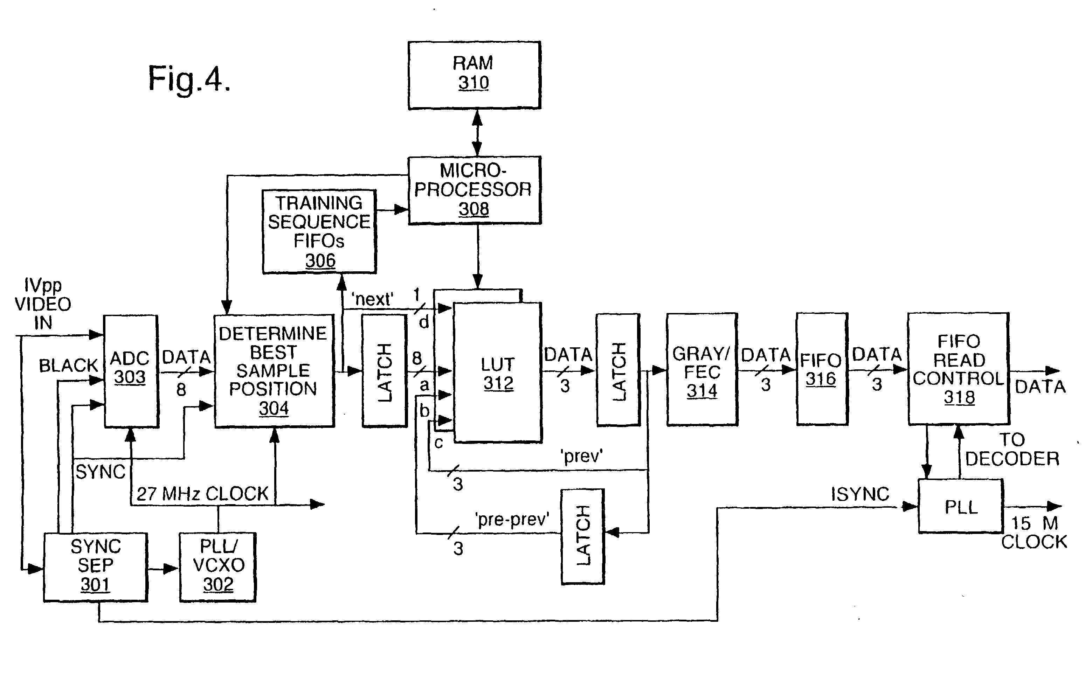

A block diagram of the receiver 30 is shown in Figure 4. A sync. separator 301 extracts sync. and black level pulses from the incoming signal. A PLL and voltage-controlled crystal oscillator (VCXO) 302 generates a line locked 27 MHz clock.

An 8-bit ADC 303 digitises the incoming signal into an 8 bit signal. The ADC 303 has an on-chip clamp and automatic gain control (AGC) which uses the sync. and black level pulses. The effect of the AGC is to set the digital output at the base of the sync. pulse 2 to 0 and the black level (i.e. the level of the front and back porch 4 and 6) to 63. A nominal maximum level video input of say 0.7V is then given a level of 213. As the AGC gain is calculated using the sync. pulse height, any clipping of the sync. pulse by the transmission network will alter this nominal maximum height. The ADC is clocked at 27 MHz.

Logic 304 which follows the ADC 303 contains a state machine which searches for the start pulses (S) after each line sync pulse 2. The start pulse S will be rounded after having passed through the network and the best sampling position is taken as the sample closest to its peak. An inverted version of the clock can be used if this gives a better sample position.

The training sequence will now be described. The training sequence is 1024 lines long and occupies five symbols at the start of each line between the start pulse S and the valid data symbols D. The first symbol (M) in the sequence indicates the start of the training sequence; it is high (level 7) on the first line of the sequence and low (level 0) on all the other lines. The next three symbols T₁, T₂, T₃, symbols count through a sequence of all the possible combinations of eight levels for the three symbols (8³ combinations), line by line, with the last symbol T₄ low (level 0) or high (level 7) giving 2x8³ i.e. 1024 combinations, occupying 1024 lines (approx. 65 mSec.)

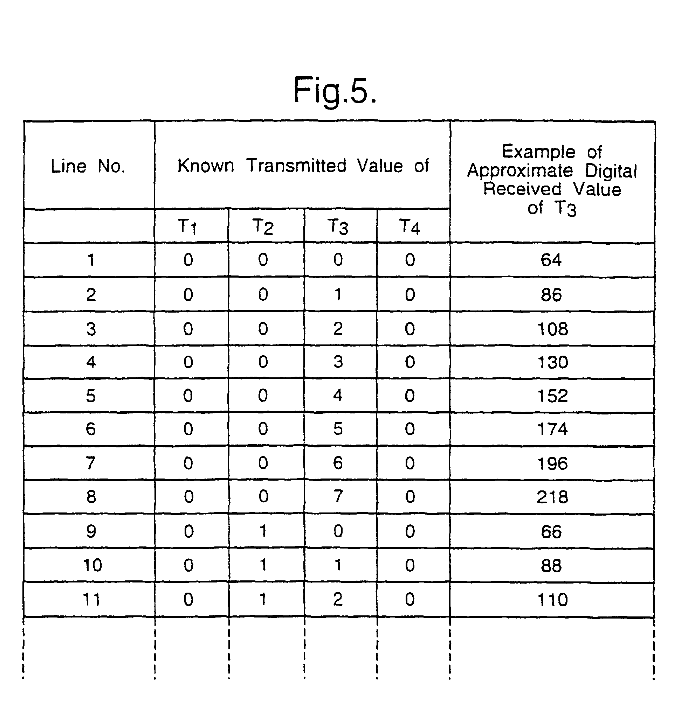

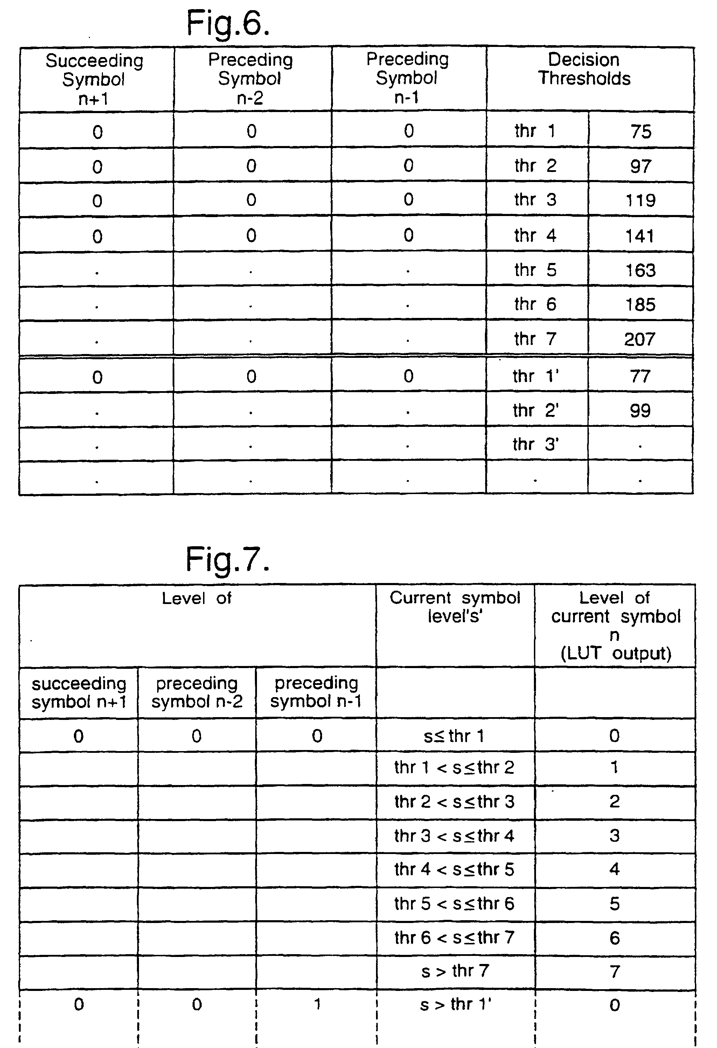

At the receiver, the level of the fourth symbol T₃ in the training sequence of each line is sampled and stored in a FIFO 306. Thus after 1024 lines the FIFO 306 contains examples of all levels of the fourth symbol with all combinations of the two preceding symbols T₁, T₂ and the succeeding symbol T₄ being low or high. Figure 5 shows an example of the contents of FIFO 306 after 11 lines of data. A microprocessor 308 calculates a set of seven decision thresholds for each of the combinations of preceding and succeeding levels and generates a look-up-table (LUT) which is stored in SRAM 312. For example, samples 1-8 in the FIFO 306 represent the levels of the fourth symbol of the training data, T₃, when both of the preceding symbols T₁ and T₂ and the succeeding symbol T₄ are at level 0. The microprocessor 308 thus calculates the seven decision thresholds to be applied when the preceding two symbols are zero and the succeeding symbol is zero. This is typically achieved by setting each threshold for T₃ halfway between the two received training levels i.e. threshold = L₁ + [(L₂-L₁)/2] where L₁ and L₂ are the received levels for successive T₃ symbols. Figure 6 shows an example of the thresholds for this example case, as stored in the microprocessor's RAM, 310. The microprocessor then uses this set of thresholds to calculate a LUT, as shown in Figure 7, and stores it in SRAM, 312.

The LUT is then used to perform thresholding of the valid data D in real time. The 8-bit input data is applied to the LUT 312, via input a. The previous two samples of the input data are input to inputs b and c respectively. The level of the subsequent sample of the input data is input via input d. This input d is a simple high/low indication derived from the sample before the one presented to input a of the comparator 312. For valid data, the succeeding sample may have any value between the maximum and the minimum (213 and 0 respectively in this embodiment). A notional threshold is set midway between the maximum and the minimum. If the value of the subsequent sample is above this threshold, the value of the subsequent sample is considered to be high; if the value is below, it is considered to be low. Inputs b and c can be taken as latched outputs from the LUT 312 as then they have been quantised and are only three bits each, reducing the required LUT size.

In practice the LUT comprises two banks of SRAM. Once the microprocessor has calculated a LUT and written it to the SRAM, it 'pages' that LUT into the real-time data path. It then performs the whole cycle again, capturing a new FIFO full of training data and recalculating a set of thresholds. These can be averaged with the previous set to reduce the effects of random noise and a new LUT calculated. This is then paged-in in place of the previous LUT. The process repeats like this as fast as the processor can perform the tasks. Thus the system adapts to the response of the communications link 40 and tracks any long term changes in the response.

As a further enhancement, the microprocessor can use the samples stored in the FIFO 306 to measure the pulse response of the link. The pulse response may indicate that the level of any sample is more dependent on the subsequent sample rather than the sample two-previously, which may happen if the bandwidth of the communications link is low. The training sequence can then be sampled at its third symbol rather than its fourth and the input to the LUTs can be changed to input more bits of the subsequent sample rather than the two-previous sample. The processor would then have samples of all the combinations of previous and subsequent samples and could generate LUTs in a similar way.

The thresholded 3-bit symbols are then inverse Gray coded and passed through the BCH FEC detector/corrector 314 which corrects any single bit errors in each 64 bit block. The data then passes through a rate conversion FIFO 316 and is re-clocked out by control 318 at a continuous 15.0 MHz. This is passed to an MPEG demultiplexer/decoder for decoding in a conventional manner.

## Claims

1. A data transmission system comprising:
a transmitter (20) having means to encode an input signal to form coded data, each element of said coded data having one of at least two discrete signal magnitude levels, the encoding means including means (207, 208) to generate a predetermined training sequence (T) of data having elements assuming said discrete levels; and
a receiver (30) having decoding means (312) to receive said coded data and to compare it with a threshold or thresholds to allow the discrete levels to be distinguishable from each other, said receiver further having threshold adaptation means (308) operable on the basis of the received training sequence to adapt said threshold(s), wherein the threshold adaptation means (308) includes means to monitor the effect of at least one of the elements (D) of the training sequence on another of said elements of the training sequence and adapt the threshold(s) accordingly.

2. A data transmission system according to claim 1 in which the transmitter is arranged to transmit a training sequence comprising groups each having a plurality of elements each assuming one of said discrete levels, successive ones of said groups cycling through different combinations of said discrete levels.

3. A data transmission system according to claim 2 in which the transmitter (20) forms a signal having a periodic structure, with each period thereof containing a said training group, a plurality of elements of said coded data, and a synchronisation pulse having an amplitude lying outside the range of said discrete levels.

4. A data transmission system according to any one of the preceding claims in which the threshold adaptation means (308) serves upon receipt of said training sequence to calculate thresholds therefrom and to store said calculated thresholds, and the decoding means (312) is connected to receive, via delay means, a feedback signal of at least one previously decoded element (b, c) and to choose different ones of said calculated thresholds in dependence upon said feedback signal.

5. A data transmission system according to claim 4 in which the decoding means (312) is also connected to receive a feed forward signal (d), being an estimate of an as yet undecoded element, upon which said choice of threshold also depends.

6. A data transmission system according to claim 4 or 5, wherein the decoding means is in the form of a look-up table (312) generated according to said calculated threshold(s).

7. A data receiver comprising:
an input for receiving an input signal including coded data, each element of said coded data representing one of at least two discrete signal magnitude levels, said input signal further including a predetermined training sequence (T), and
decoding means (312) to compare said coded data with a threshold or thresholds to allow the discrete levels to be distinguishable one from another, said receiver further having threshold adaptation means (308) operable on the basis of the received training sequence to adapt said threshold(s), **characterised in that** the threshold adaptation means (308) includes means to monitor the effect of at least one of the elements (D) of the training sequence on another of said elements of the training sequence and adapt the threshold(s) accordingly.

8. A data receiver according to claim 7 in which the threshold adaptation means (308) serves upon receipt of said training sequence to calculate thresholds therefrom and to store said calculated thresholds, and the decoding means is connected to receive, via delay means, a feedback signal of at least one previously decoded element (b, c) and to choose different ones of said calculated thresholds in dependence upon said feedback signal.

9. A data receiver according to claim 8 in which the decoding means (312) is also connected to receive a feedforward signal (d), being an estimate of an as yet undecoded element, upon which said choice of threshold also depends.

10. A data receiver according to claim 8 or 9, wherein the decoding means is in the form of a look-up table (312) generated according to said calculated threshold(s).

11. A data transmitter having means to encode an input signal to form coded data, each element of said coded data having one of at least two discrete signal magnitude levels, the encoding means including means to generate a predetermined training sequence (T) of data having elements assuming said discrete levels, said transmitter being arranged to transmit a training sequence comprising a plurality of groups each having a plurality of elements each assuming one of said discrete levels, successive ones of said groups cycling through different combinations of said discrete levels.

12. A data transmitter as claimed in claim 11 in which the transmitter forms a signal having a periodic structure, with each period thereof containing a said training group, a plurality of elements of said coded data, and a synchronisation pulse having an amplitude lying outside the range of said discrete levels.

## Patentansprüche

1. Datenübertragungssystem mit:
einem Sender (20) mit einer Einrichtung zum Kodieren eines Eingangssignals, um kodierte Daten zu erzeugen, wobei jedes Element der kodierten Daten einen von wenigstens zwei diskreten Pegeln der Signalgröße aufweist, wobei die Kodierungseinrichtung eine Einrichtung (207, 208) enthält, um eine vorher festgelegte Trainingssequenz (T) von Daten zu erzeugen, die Elemente haben, die die diskreten Pegel annehmen; und
einem Empfänger (30) mit einer Dekodierungseinrichtung (312), um die kodierten Daten zu empfangen und sie mit einer Schwelle oder Schwellen zu vergleichen, um zu ermöglichen, dass die diskreten Pegel voneinander unterschieden werden können, wobei der Empfänger weiter eine Einrichtung zur Schwellenanpassung (308) hat, die auf der Basis der empfangenen Trainingsabfolge betrieben werden kann, um die Schwelle(n) anzupassen, wobei die Einrichtung zur Schwellenanpassung (308) eine Einrichtung enthält, um die Auswirkungen von wenigstens einem der Elemente (D) der Trainingssequenz auf ein anderes der Elemente der Trainingsabfolge zu überwachen und die Schwelle(n) entsprechend anzupassen.

2. Datenübertragungssystem nach Anspruch 1, bei dem der Sender dazu eingerichtet ist, eine Trainingssequenz zu senden, die Gruppen umfasst, die jede eine Mehrzahl von Elementen haben, von denen jedes einen der diskreten Pegel annimmt, wobei nachfolgende der Gruppen verschiedene Kombinationen der diskreten Pegel zyklisch wiederholen.

3. Datenübertragungssystem nach Anspruch 2, bei dem der Sender (20) ein Signal mit einer periodischen Struktur erzeugt, wobei jede Periode davon eine Trainingsgruppe, eine Mehrzahl von Elementen der kodierten Daten und einen Synchronisationspuls enthält, der eine Amplitude hat, die außerhalb des Bereiches der diskreten Pegel liegt.

4. Datenübertragungssystem nach irgend einem der vorangehenden Ansprüche, bei dem die Einrichtung zur Schwellenanpassung (308) auf den Empfang der Trainingssequenz hin dazu dient, die Schwellen daraus zu berechnen und die berechneten Schwellen zu speichern, und die Dekodierungseinrichtung (312) angeschlossen ist, um über eine Verzögerungseinrichtung ein Rückkopplungssignal von wenigstens einem der zuvor dekodierten Elemente (b, c) zu .empfangen, und verschiedene der berechneten Schwellen in Abhängigkeit des Rückkopplungssignals auszuwählen.

5. Datenübertragungssystem nach Anspruch 4, bei dem die Dekodierungseinrichtung (312) auch angeschlossen ist, um ein Vorwärtskopplungssignal (d) zu empfangen, das eine Schätzung von einem bisher undekodierten Element ist, von der die Wahl der Schwelle auch abhängt.

6. Datenübertragungssystem nach Anspruch 4 oder 5, bei der die Dekodierungseinrichtung die Form einer Nachschlagetabelle (312) hat, die entsprechend der(den) berechneten Schwelle(n) erzeugt wurde.

7. Datenempfänger mit:
einem Eingang zum Empfangen eines Eingangssignals, das kodierte Daten enthält, wobei jedes Element der kodierten Daten einen von wenigstens zwei diskreten Pegeln der Signalgröße darstellt, wobei das Eingangssignal weiter eine vorher festgelegte Trainingssequenz (T) enthält, und
einer Dekodierungseinrichtung (312), um die kodierten Daten mit einer Schwelle oder Schwellen zu vergleichen, um zu ermöglichen, dass die diskreten Pegel voneinander unterschieden werden können, wobei der Empfänger weiter eine Einrichtung zur Schwellenanpassung (308) hat, die auf Basis der empfangenen Trainingssequenz betrieben werden kann, um die Schwelle(n) anzupassen, **dadurch gekennzeichnet, dass** die Einrichtung zur Schwellenanpassung (308) eine Einrichtung enthält, um die Auswirkungen von wenigstens einem der Elemente (D) der Trainingssequenz auf ein anderes der Elemente der Trainingssequenz zu überwachen und die Schwelle(n) entsprechend anzupassen.

8. Datenempfänger nach Anspruch 7, bei dem die Einrichtung zur Schwellenanpassung (308) auf den Empfang der Trainingssequenz hin dazu dient, die Schwellen daraus zu berechnen und die berechneten Schwellen zu speichern, und die Dekodierungseinrichtung (312) angeschlossen ist, um über eine Verzögerungseinrichtung ein Rückkopplungssignal von wenigstens einem der zuvor dekodierten Elemente (b, c) zu empfangen, und verschiedene der berechneten Schwellen in Abhängigkeit des Rückkopplungssignals auszuwählen.

9. Datenempfänger nach Anspruch 8, bei dem die Dekodierungseinrichtung (312) auch angeschlossen ist, um ein Vorwärtskopplungssignal (d) zu empfangen, das eine Schätzung von einem bisher undekodierten Element ist, von der die Wahl der Schwelle auch abhängt.

10. Datenempfänger nach Anspruch 8 oder 9, bei dem die Dekodierungseinrichtung die Form einer Nachschlagetabelle (312) hat, die entsprechend der(den) berechneten Schwelle(n) erzeugt wurde.

11. Datensender mit einer Einrichtung zum Kodieren eines Eingangssignals, um kodierte Daten zu erzeugen, wobei jedes Element der kodierten Daten einen von wenigstens zwei diskreten Pegeln der Signalgröße aufweist, wobei die Kodierungseinrichtung eine Einrichtung enthält, um eine vorher festgelegte Trainingssequenz (T) von Daten zu erzeugen, die Elemente haben, die die diskreten Pegel annehmen, wobei der Sender dazu eingerichtet ist, eine Trainingssequenz zu senden, die eine Mehrzahl von Gruppen umfasst, die jede eine Mehrzahl von Elementen hat, von denen jedes einen der diskreten Pegel annimmt, wobei nachfolgende der Gruppen verschiedene Kombinationen der diskreten Pegel zyklisch wiederholen.

12. Datensender wie in Anspruch 11 beansprucht, bei dem der Sender ein Signal mit einer periodischen Struktur erzeugt, wobei jede Periode davon eine Trainingsgruppe, eine Mehrzahl von Elementen der kodierten Daten und einen Synchronisationspuls enthält, der eine Amplitude hat, die außerhalb des Bereiches der diskreten Pegel liegt.

## Revendications

1. Système de transmission de données comprenant :
un émetteur (20) comportant un moyen pour coder un signal d'entrée afin de former des données codées, chaque élément desdites données codées présentant l'un d'au moins deux niveaux discrets d'amplitude de signal, le moyen de codage comprenant un moyen (207, 208) pour engendrer une séquence d'apprentissage prédéterminée (T) de données ayant des éléments prenant lesdits niveaux discrets, et
un récepteur (30) comportant un moyen de décodage (312) pour recevoir lesdites données codées et les comparer à un seuil ou à des seuils pour permettre que les niveaux discrets puissent être distingués l'un de l'autre, ledit récepteur comportant en outre un moyen d'adaptation de seuil (308) pouvant être mis en oeuvre d'après la séquence d'apprentissage reçue pour adapter ledit ou lesdits seuils, dans lequel le moyen d'adaptation de seuil (308) comprend un moyen pour surveiller l'effet d'au moins l'un des éléments (D) de la séquence d'apprentissage sur un autre desdits éléments de la séquence d'apprentissage et adapter le ou les seuils en conséquence.

2. Système de transmission de données selon la revendication 1, dans lequel l'émetteur est agencé pour émettre une séquence d'apprentissage comprenant des groupes ayant chacun une pluralité d'éléments prenant chacun l'un desdits niveaux discrets, des groupes successifs parmi lesdits groupes effectuant une itération par différentes combinaisons desdits niveaux discrets.

3. Système de transmission de données selon la revendication 2, dans lequel l'émetteur (20) élabore un signal présentant une structure périodique, chaque période de celui-ci contenant un dit groupe d'apprentissage, une pluralité d'éléments desdites données codées et une impulsion de synchronisation présentant une amplitude située en dehors de la plage desdits niveaux discrets.

4. Système de transmission de données selon l'une quelconque des revendications précédentes, dans lequel le moyen d'adaptation de seuil (308) sert, à la réception de ladite séquence d'apprentissage, à calculer des seuils à partir de celle-ci et à mémoriser lesdits seuils calculés, et le moyen de décodage (312) est relié de façon à recevoir, par l'intermédiaire d'un moyen à retard, un signal de contre-réaction d'au moins un élément décodé antérieurement (b, c) et à choisir des seuils différents parmi lesdits seuils calculés, selon ledit signal de contre-réaction.

5. Système de transmission de données selon la revendication 4, dans lequel le moyen de décodage (312) est également relié de façon à recevoir un signal de précompensation (d), qui constitue une estimation d'un élément restant encore non décodé, de laquelle ledit choix du seuil dépend également.

6. Système de transmission de données selon la revendication 4 ou 5, dans lequel le moyen de décodage est sous forme d'une table de consultation (312) générée conformément audit seuil ou auxdits seuils calculés.

7. Récepteur de données comprenant :
une entrée destinée à recevoir un signal d'entrée comprenant des données codées, chaque élément desdites données codées représentant l'un d'au moins deux niveaux discrets d'amplitude de signal, ledit signal d'entrée comprenant en outre une séquence d'apprentissage prédéterminée (T), et
un moyen de décodage (312) pour comparer lesdites données codées à un seuil ou à des seuils afin de permettre que les niveaux discrets puissent être distingués l'un de l'autre, ledit récepteur comportant en outre un moyen d'adaptation de seuil (308) pouvant être mis en oeuvre d'après la séquence d'apprentissage reçue pour adapter ledit ou lesdits seuils, **caractérisé en ce que** le moyen d'adaptation de seuil (308) comprend un moyen pour surveiller l'effet d'au moins l'un des éléments (D) de la séquence d'apprentissage sur un autre desdits éléments de la séquence d'apprentissage et adapter le ou les seuils en conséquence.

8. Récepteur de données selon la revendication 7, dans lequel le moyen d'adaptation de seuil (308) sert, à la réception de ladite séquence d'apprentissage, à calculer des seuils à partir de celle-ci et à mémoriser lesdits seuils calculés, et le moyen de décodage est relié de façon à recevoir, par l'intermédiaire d'un moyen à retard, un signal de contre-réaction d'au moins un élément décodé précédemment (b, c) et à choisir des seuils différents parmi lesdits seuils calculés, selon ledit signal de contre-réaction.

9. Récepteur de données selon la revendication 8, dans lequel le moyen de décodage (312) est également relié de façon à recevoir un signal de précompensation (d), qui constitue une estimation d'un élément restant encore non décodé, de laquelle ledit choix du seuil dépend également.

10. Récepteur de données selon la revendication 8 ou 9, dans lequel le moyen de décodage est sous forme d'une table de consultation (312) générée conformément audit seuil ou auxdits seuils calculés.

11. Emetteur de données comportant un moyen pour coder un signal d'entrée afin d'élaborer des données codées, chaque élément desdites données codées présentant l'un d'au moins deux niveaux discrets d'amplitude de signal, le moyen de codage comprenant un moyen pour générer une séquence d'apprentissage prédéterminée (T) de données comportant des éléments prenant lesdits niveaux discrets, ledit émetteur étant agencé pour émettre une séquence d'apprentissage comprenant une pluralité de groupes comportant chacun une pluralité d'éléments prenant chacun l'un desdits niveaux discrets, des groupes successifs parmi lesdits groupes effectuant une itération sur différentes combinaisons desdits niveaux discrets.

12. Emetteur de données selon la revendication 11, dans lequel l'émetteur élabore un signal présentant une structure périodique, chaque période de celui-ci contenant un dit groupe d'apprentissage, une pluralité d'éléments desdites données codées, et une impulsion de synchronisation présentant une amplitude située en dehors de la plage desdits niveaux discrets.
